# EUROPEAN PATENT APPLICATION

(11) **EP 3 053 669 A1**
(43) Date of publication of application: **10.08.2016**
(21) Application number: 16154705.4
(22) Date of filing: 08.02.2016
(51) Int. Cl.: B21J 5/12, F16B 5/04, F16D 69/04, B32B 15/18

(54) **MATERIAL WITH SELF-LOCKING BARBS & METHOD FOR LOCKING BARBS**

(30) Priority: 09.02.2015 US 201514617658
(71) Applicant: R.A. Investment Management S.A.R.L., 1855 Luxembourg (LU)
(72) Inventor: ARBESMAN, Ray, Toronto, Ontario M5P 1V2 (CA); MACKELVIE, Winston, Knowlton, Québec J0E 1V0 (CA)
(74) Representative: Buzzi, Franco

(57) **Abstract**

A method of attaching a sheet (100) of barbed material to a substrate includes positioning the sheet adjacent a face of a substrate. The sheet has a plurality of barbs (106) extending from a planar portion (104). Each barb (106) has a root (108) adjacent the planar portion, a shank (110) adjacent the root, and a pointed tip (112) adjacent the shank. The tip overlies the shank and the root. The tip is pointed in a direction away from the planar portion. The shank has a concave side and a convex side. The method further includes pushing the barbs into the substrate to embed the barbs in the substrate. While pushing the barbs into the substrate, the concavity of the concave side is increased to create a capture zone of the substrate between the root and the tip of each barb.

## Description

### CROSS REFERENCES TO RELATED APPLICATIONS

This application claims priority from United States Patent Application No. 14/617,658, filed on February 9, 2015, the entirety of which is incorporated herein by reference.

### FIELD

The disclosure relates to the mechanical fastening of materials and more particularly to mechanical fastening of materials where one of the materials to be fastened is a sheet having raised and pointed barbs.

### BACKGROUND

Short press-in fasteners can suffer from low pull-out strength as exemplified in the extreme by a thumbtack pressed into foam. This is because such fasteners rely on the friction created by the shank spreading apart the substrate.

Screw-in fasteners on the other hand can provide much greater pull-out strength, but require can more time and effort to rotate the screw into the substrate. The increase in pull-out strength is achieved due to the fact that substrate material is trapped or captured between the threads of the screw while the trapped substrate material remains contiguous with the surrounding substrate material. The result is that considerably more force can be required to pull out a screw out as compared to a press-in fastener.

U.S. Patent No. 5,376,410 (MacKelvie) purports to disclose a method for treating a surface which is to be bonded to another surface. The method comprises displacing a portion of the surface material to a position such that the displaced material, while remaining an integral part of the surface, forms a burr which is adapted to mechanically engage a flexible material placed adjacent thereto to thereby provide a mechanical interlocking action.

### SUMMARY

The following summary is intended to introduce the reader to various aspects of the disclosure, but not to define or delimit any invention.

According to some aspects, a sheet of material includes a planar portion, and a plurality of barbs extending from the planar portion. Each of at least some of the barbs has, respectively, a barb root adjacent the planar portion, a barb shank adjacent the barb root, and a pointed barb tip adjacent the barb shank. The pointed barb tip overlies the barb shank and overlies the barb root. The pointed barb tip is pointed in a direction away from the planar portion. The barb shank has a concave side and a convex side.

At least some of the barbs may be coated with hard particulate material. The hard particulate material may include abrasive grains adhered to the barbs. The hard particulate material may include at least one of sand, aluminum oxide, silicon carbide, garnet and emery.

The sheet of material may be a metal, and the barbs may extend integrally from the face.

The pointed barb tip may be pointed in a direction generally perpendicular to the planar portion.

According to some aspects, a method of attaching a sheet of barbed material to a substrate includes a) positioning a portion of the sheet of barbed material so that a plurality of barbs on a textured face of the portion are proximate to a substantially flat face of a substrate; b) curving the portion away from the substantially flat face of the substrate so that the textured face is not parallel to the substantially flat face of the substrate; and c) embedding the plurality of barbs in the substrate while curving the portion back towards the substrate to position the textured face parallel to the substantially flat face of the substrate.

Embedding the plurality of barbs into the substrate and curving the portion back towards the substrate may be performed by a roller.

At least some of the barbs may be curved so that one side is convex and an opposite side is concave. In step c), the curved barbs may deflect, increasing the concavity of the concave side of each curved barb as each curved barb embeds into the substrate.

Step c) may include deflecting the barbs as they are embedded in the substrate.

According to some aspects, a method of attaching a sheet of barbed material to a substrate includes a) positioning a sheet of barbed material adjacent a face of a substrate. The sheet of barbed material has a planar portion, and a plurality of barbs extending from the planar portion. Each of at least some of the barbs has, respectively, a barb root adjacent the planar portion, a barb shank adjacent the barb root, and a pointed barb tip adjacent the barb shank. The pointed barb tip overlies the barb shank and overlies the barb root. The pointed barb tip is pointed in a direction away from the planar portion. The barb shank has a concave side and a convex side. The method further includes b) pushing the barbs into the substrate to embed the barbs in the substrate; and c) while pushing the barbs into the substrate, increasing the concavity of the concave side to create a capture zone of the substrate between the barb root and the pointed barb tip of each barb.

Step b) may include i) pushing the pointed barb tips into the substrate, and ii) pushing the barb shanks into the substrate. The concavity of the concave side may be increased during step ii), and optionally only during step ii).

The method may further include, prior to step b), coating the barbs with a hard particulate material. Step b) may include embedding the particulate material in the substrate.

The pointed barb tip may be pointed in a direction generally perpendicular to the planar portion.

According to some aspects, there is provided a textured sheet of ductile material with barbs extending from a face of the sheet of ductile material. Some or all of the barbs are self-locking barbs. Each self-locking barb is curved so that one side is convex and an opposite side is concave, and a thrust line that is perpendicular to the face of the sheet of ductile material lies entirely within each self-locking barb. As a result, when a self-locking barb is pushed (or pressed) into a substrate, the self-locking barb deflects, increasing the concavity of the concave side of the self-locking barb while the self-locking barb fully penetrates into the substrate so that the textured sheet of ductile material is bound to the substrate with a portion of the substrate material above an end portion of the self-locking barb, thereby providing pull-out resistance.

Some or all of the self-locking barbs may be coated with hard particulate material. All of the self-locking barbs may be coated with hard particulate material. The hard particulate material may be abrasive grains adhered to the barbs. For example, the hard particulate material may include sand, aluminum oxide, silicon carbide, garnet or emery.

According to some aspects, there is provided a textured sheet of ductile material with barbs extending from a face of the sheet of ductile material, where a portion of the textured sheet is curved so that the textured face in the curved portion of the sheet is convex. The textured sheet can then be bonded to a substrate by pressing the textured face of the sheet into the substrate, causing the curved portion of the sheet to flatten as the barbs are penetrating the substrate so that lateral force is applied to the barbs in the curved portion of the sheet and at least some of the barbs in the curved portion of the sheet deflect while they are entering the substrate. As a result, a portion of the substrate material is above end portions of at least some of the barbs, thereby providing pull-out resistance. There may be multiple such curved portions of the textured sheet.

According to some aspects, there is provided a method of attaching a sheet of barbed material to a substrate. The sheet of barbed material has a textured face with barbs extending from the face. The substrate is made of a barb-penetrable material and has a substantially flat face. In this method, a portion of the sheet of barbed material is positioned to be proximate to the substrate so that the portion of the sheet of barbed material is curved away from the substantially flat face of the substrate. In this position, the textured face of the portion of the sheet of barbed material is not parallel to the substantially flat face of the substrate and the barbs on the portion of the sheet of barbed material are proximate to the flat face of the substrate. Then the portion of the sheet of barbed material is pressed into the substrate while the sheet of barbed material is being rotated so that the barbed face of the portion of the sheet of barbed material becomes parallel to the substantially flat face of the substrate when the barbs in the portion of the sheet of barbed material are fully embedded in the substrate. The rotation of the sheet of barbed material causes the barbs to deflect as they enter the substrate so that portions of the substrate material are above end portions of at least some, and preferably all, of the barbs in the portion of the sheet of barbed material, thereby providing pull-out resistance.

The pressing of the portion of the sheet of barbed material into the substrate may be performed by a roller. Some or all of the barbs in the portion of the sheet of barbed material may be self-locking barbs. Each self-locking barb may be curved so that one side is convex and an opposite side is concave, and a thrust line that is perpendicular to the textured face of the sheet of ductile material lies entirely within each of the self-locking barbs. When each of the self-locking barbs is pressed into a substrate, the self-locking barb may deflect, increasing the concavity of the concave side of the self-locking barb while the self-locking barb fully penetrates into the substrate.

According to some aspects, there is a laminate made from a sheet of ductile material and a substrate. The sheet of ductile material has barbs extending from a face of the sheet of ductile material. The sheet of ductile material is mated to a substrate by some or all of the barbs of the sheet of ductile material being embedded in the substrate so that for each of a plurality of the embedded barbs, a portion of the substrate is above an end portion of the embedded barb, thereby providing pull-out resistance. Some or all of the embedded barbs may be self-locking barbs such that each self-locking barb is curved so that one side is convex and an opposite side is concave. In such embodiments, prior to the sheet of ductile material and the substrate being mated, a thrust line that is perpendicular to the face of the sheet of ductile material lies entirely within the self-locking barb and when the self-locking barb is pressed into the substrate, the self-locking barb deflects, increasing the concavity of the concave side of the self-locking barb while the self-locking barb fully penetrates into the substrate.

### BRIEF DESCRIPTION OF THE DRAWINGS

The drawings included herewith are for illustrating various examples of articles, methods, and apparatuses of the present disclosure and are not intended to limit the scope of what is taught in any way. In the drawings:
Figure 1 is a partial perspective view of an example sheet of material, showing a single pointed barb made of material carved or gouged out of a groove in the surface of the ductile material;
Figure 2 is a side cross-sectional view showing a single cutting tool tooth advancing from left to right into a sheet of ductile material, carving one groove and raising one barb that is hook-shaped;
Figure 3 is a side cross sectional view showing the sheet of ductile material of Figure 2, where the tooth has carved the groove and raised the barb, and is retracting from right to left, whereby a non-cutting projection on the tooth tip irons the tip back so that it points generally away from the planar portion of the sheet;
Figure 4 is a perspective view of the sheet of material of Figure 1, where alternate rows of barbs are cut from opposite directions;
Figure 5 is a side cross-sectional view showing an example self-locking barb starting to penetrate a substrate material;
Figure 6 is a side cross-sectional view of the barb and substrate of Figure 5, showing the barb further penetrating the substrate material, where forces on the barb have started deflecting the barb from a straight path;
Figure 7 is a side cross-sectional view of the barb and substrate of Figure 6, showing the barb still further penetrating the substrate material and locking into the substrate by deflection, and showing a capture zone of the substrate between the tip of the barb and the face of the sheet;
Figure 8 schematically depicts an example wherein a barbed sheet is curved against rolls, causing the barbs to naturally fan out (i.e. deflect from the perpendicular), and then being forced to deflect back (i.e. towards the perpendicular) as they mate with the substrate, causing deflection and locking;
Figure 9 is an enlarged view of a portion of Figure 8, showing only the upper barbed sheet and showing how barbs lock by capturing substrate between the tip of the barb and the face of the sheet;
Figure 10 is a cross-sectional view of an example where barbed sheet material has wavy portions, and a rigid pressure plate above carries a recessed elastomer pad to apply a force to the sheet material;
Figure 11 shows the example of Figure 10, where the barbs beneath the pad are embedded in the substrate, and the solid ends of the pressure plate have flattened the wavy portions, thereby causing deflection of those barbs and locking them into the substrate;

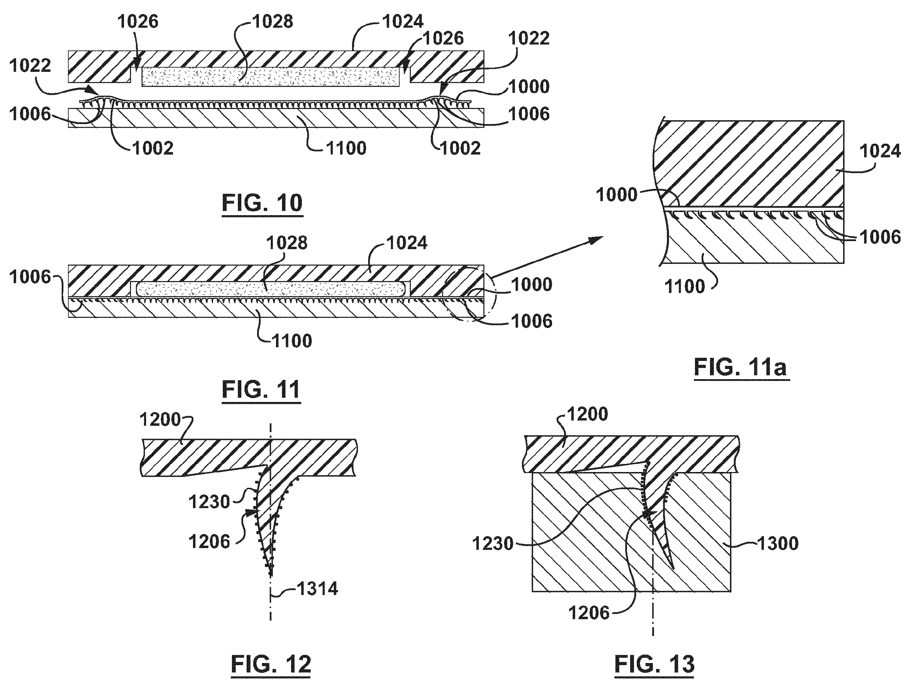

Figure 11 a is an enlarged view of the circled portion of Figure 11, showing where self-locking has occurred;
Figure 12 is a partial side cross-sectional view of another example of barbed material where the barbs (only one shown) have been surface coated with hard particulate material, such as abrasive grains, that facilitate locking of the barbs into the substrate; and
Figure 13 is a partial side cross-sectional view of the barbed material of Figure 12, showing the barb embedded in a substrate and locked.

### DETAILED DESCRIPTION

Various apparatuses or processes will be described below to provide an example of an embodiment of the claimed subject matter. No embodiment described below limits any claim and any claim may cover processes or apparatuses that differ from those described below. The claims are not limited to apparatuses or processes having all of the features of any one apparatus or process described below or to features common to multiple or all of the apparatuses described below. It is possible that an apparatus or process described below is not an embodiment of any exclusive right granted by issuance of this patent application. Any subject matter described below and for which an exclusive right is not granted by issuance of this patent application may be the subject matter of another protective instrument, for example, a continuing patent application, and the applicants, inventors or owners do not intend to abandon, disclaim or dedicate to the public any such subject matter by its disclosure in this document.

Disclosed herein are textured sheets of material (also referred to herein as "sheets" or "textured sheets", or "sheets of barbed material"), which may be a ductile material, such as metal (e.g. steel). The textured sheets of material have multiple barbs on one or more faces thereof (a face with barbs may also be referred to as a "textured face" or a "barbed face"). In some examples, the barbs may be referred to as "self-locking" barbs. The textured sheets of material may be used in the formation of laminates where a layer of a substrate material, such as hard foam or wood, is pressed against the textured face so that the barbs penetrate the substrate and lock the two layers together in a laminate.

Examples of suitable substrates (e.g. for use with metal (e.g. steel) textured sheet material) include wood, particle board, hard foam and other such "expanded" or "composite" substrates, and pliant materials such as softer plastics and metals. In order to be "suitable", the substrate material should "give way" to a deflecting barb as the barb penetrates the substrate.

In some examples, the barbs self-lock in the substrate to increase pull-out resistance. The term "self-lock" refers to the deflection of at least some of the barbs while they are entering the substrate. In some examples, the shape of the barbs is configured to facilitate straight-in initial entry into the substrate, after which the path of the barb into the substrate deflects from a straight path. A capture zone of substrate material is thereby created for each barb, between the respective tips of each barb and the planar portion of the textured face, to lock or trap the barb in the substrate.

In some examples, self-locking is achieved by the process used to embed the barbs in the substrate, independent of the shape of the barbs. For example, the textured sheet may be curved before mating with the substrate, causing the barbs to angularly fan out (e.g. tilt away from perpendicular) before they enter the substrate. Then, as the barbs enter the substrate, they transition back (e.g. towards the perpendicular) causing them to deflect and self-lock.

Adding secondary material to the barbs (e.g. a particulate material) can also be used to facilitate deflection and self-locking.

As used herein, the term "barb" is interchangeable with the term "piercing member", and refers to a nail-like or pin-like structure, or hooked structure, raised from the surface of a material, for example by carving, gouging, planing or scraping its surface, such as is described in Canadian patent numbers 1,330,521, 1,337,622, and 2,127,339, and in Canadian patent application number 2,778,455. The use of such textured materials to form laminates is described in Canadian patent application numbers 2,778,455, and 2,821,897.

Certain forms of barbed materials are available from Nucap Industries Inc., of Toronto, Canada.

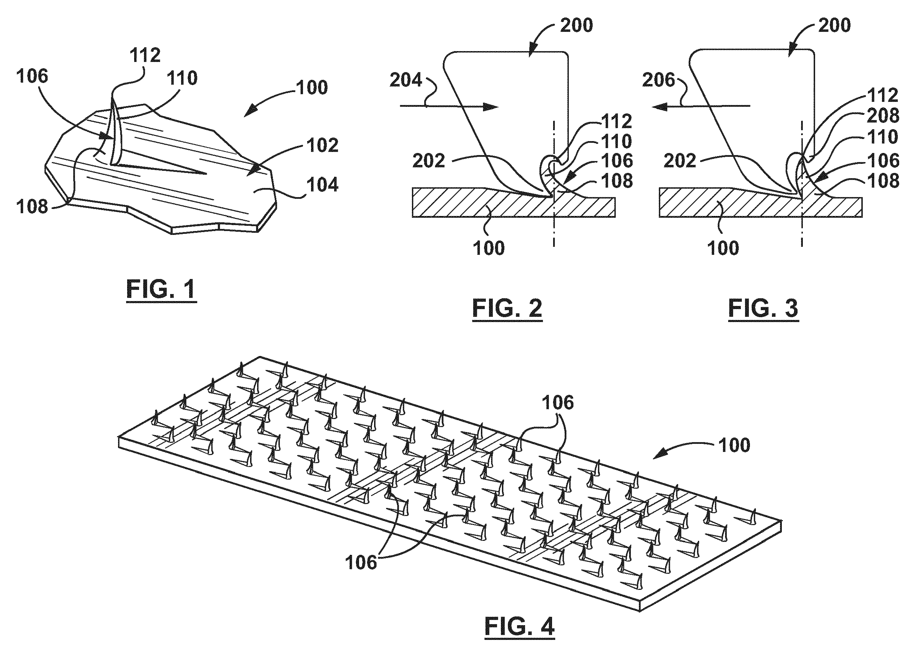

Referring now to Figure 1, a portion of an example textured sheet material 100 is shown. The material 100 includes a planar portion 104, and barbs 106 (only one of which is shown) extending integrally from the planar portion 104. The face from which the barbs 106 extend may be referred to as a textured face 104 of the sheet. In the example shown, the sheet material 100 has only one textured face 104. In alternative examples, a sheet material may have two textured faces, or a face that is only partially textured.

In the example shown, the barbs are self-locking barbs 106, in that they are shaped to deflect while they are entering a substrate (as will be described in further detail).

Referring still to Figure 1, each barb 106 has a barb root 108 adjacent the planar portion 104, a barb shank 110 adjacent the barb root 108, and barb tip 112 adjacent the barb shank 110. In the example shown, the barb tip 112 is pointed, so that it may pierce into (or penetrate or puncture) one or more substrates.

The barbs 106 can be created by displacement from the sheet 100, whereby a shallow groove is carved into the sheet 100 to create each barb 106. The sheet 100 can be a ductile material, for example a metal such as steel. In other examples, other materials may be used, such as plastics.

Figures 2 and 3 schematically show the creation of a barb 106. In Figures 2 and 3, a single cutting tooth 200 is shown creating a single barb 106. The cutting tooth 200 can be one of a series of cutting teeth arranged in tandem on a blade. As the tooth tip 202 advances from left to right (arrow 204) it carves a groove by severing material and pushing it forward and upward to create barb 106, including its root 108, shank 110, and tip 112. The barbs created by this process may have a hook-like shape, i.e. where the barb tip 112 points back towards the planar portion 104. Alternatively, the barbs created by this process may be shaped so that the barb tip 112 points away from the planar portion 104. For example, the barb tip 112 may point in a direction that is generally perpendicular to the planar portion of the sheet 100. The shape of the barb created in this process may depend on the type and hardness of the sheet material, and on tool parameters and tooth tip geometry. As used herein, the phrase "generally perpendicular" is intended to include angles that are perpendicular, as well as angles that deviate slightly from perpendicular, for example angles of between about 75 degrees and 105 degrees. In Figure 2, a hook-like barb shape 106 has been created.

Referring to Figure 3, the tooth tip 202, having created barb 106, retracts (arrow 206) from right to left. In this example, the hook-like barb of Figure 2 is reshaped to have a tip that points away from the planar portion, by a non-cutting projection 208 on the tooth tip 202 that irons the barb 106 back to pint away from the planar portion 104 of the sheet 100. The non-cutting projection 208 can also be designed to iron the barb 106 back into other shapes. In this manner, barbs that have been shaped for self-locking can be formed on the sheet 100.

Referring now to Figure 4, a perspective view of sheet 100 is shown. The sheet 100 has rows of barbs 106, which are bi-directional, so that alternate rows are cut from opposite directions and therefore are shown "leaning" in opposite directions. The tooling that cuts the barbs 106 may have a pack of alternately directed toothed blades that move in opposite directions to cancel cutting forces.

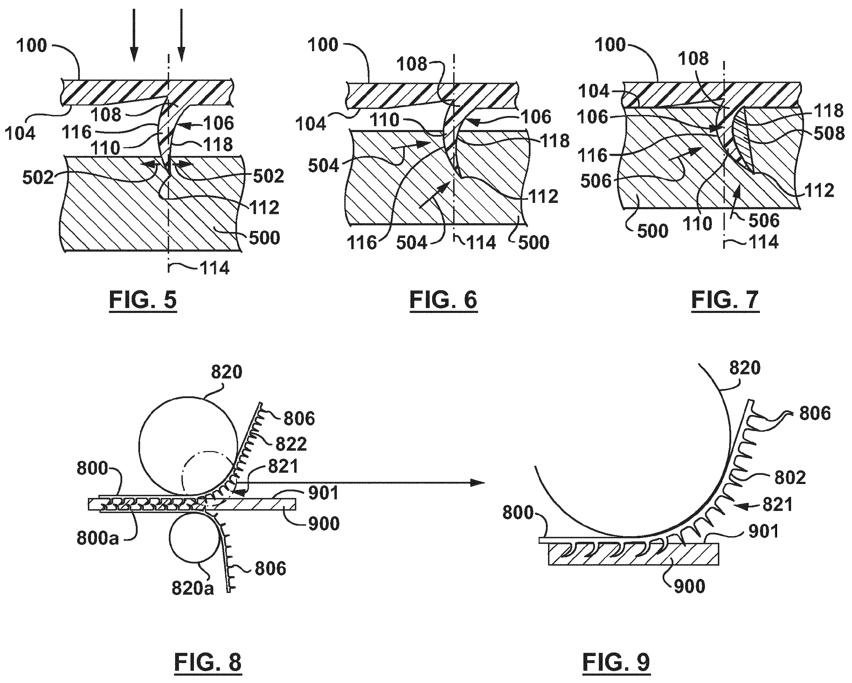

Figures 5 to 7 show textured sheet material 100 with self-locking barbs 106, where the barbs 106 are shaped for self-locking (also referred to as "self-clinching") into substrate 500. The barbs 106 are shaped so that each barb tip 112 initially enters the substrate 500 along a generally straight line that is generally perpendicular to the planar portion 104, and so that the barbs deflect and bend as they embed further into the substrate, which results in locking or clinching of the barbs 106 into the substrate.

Particularly, referring to Figure 5, the barb tip 112 is pointed away from the planar portion. As noted above, in some examples, the barb tip 112 may point in a direction that is generally perpendicular to the planar portion 104. Furthermore, the barb tip 112 overlies the barb root 108 and barb shank 110. In other words, each barb is associated with a respective thrust line 114, which extends perpendicular to the planar portion 104. The phrase 'the barb tip 112 overlies the barb root 108 and barb shank 110' indicates that the thrust line passes through the barb root 108, the barb shank 110, and the barb tip 112, and along the length of the barb 106, the thrust line 114 lies entirely within the barb 106. That is, along the length of the barb 106 (i.e. between the barb tip 112 and barb root 108), the thrust line 114 does not pass out of the barb 106, as could be the case with a barb that is hooked or tilted heavily in one direction). This supports the tip 112 against premature bending when the tip 112 begins its entry into the substrate 500, as the barb root 108 and barb shank 110 support the barb tip 112.

In addition, the shank 110 has a curvature, wherein one side or portion (i.e. the left side or portion of the illustrated barb) has a convex surface 116, and the opposite side or portion (i.e. the right side or portion of the illustrated barb) has a concave surface 118. This curvature facilitates bending of the barb 106 after the tip 112 has entered the substrate 500.

Referring still to Figure 5, the barb 106 is initially pushed into the substrate, along thrust line 114. Arrows 502 represent equal forces acting perpendicularly to the barb tip 112 as it enters the substrate 500.

Referring to Figure 6, as the barb 106 goes deeper into the substrate, due to the curvature of the shank 110, the forces (represented by arrows 504) now predominately act on the barb's convex surface 116, causing the barb 106 to begin to deflect from the thrust line 114.

Referring to Figure 7, the forces (represented by arrows 506) are maximized on the convex surface 116, and deflection of the barb 106 has locked the barb 106 into the substrate 500. The concavity of the concave surface 118 of the barb 106 has increased significantly. The barb 106 has deflected sufficiently so that a "capture zone" 508 of substrate material is created adjacent the concave surface 118, and between the barb tip 112 and barb root 108. As a result, straight pull-out of the barb 106 from the substrate 500 is hindered, because in addition to having to overcome friction, a straight pull-out would require re-forming of the barb 106 and/or tearing and/or displacement of material in the capture zone 508. The result of this locking action is increased pull-apart resistance of the mechanically connected materials.

Figures 8 and 9 shown an alternative example, wherein self-locking is achieved by the process used to embed the barbs the substrate, independent of the shape of the barbs.

Referring to Figure 8, textured sheet material 800, 800a, with barbs 806, is fed against curved rolls 820, 820a (or rollers). Curving (bending) the sheets 800, 820a causes the barbs 806 to fan out from their normal orientations (e.g. to fan away from their perpendicular orientations), so that they are deflected by off-balance forces as they enter the substrate 900, thereby creating multiple capture zones 908 (shown in Figure 9) and locking action.

Particularly, in the process of Figures 8 and 9, when the sheet 800 is against the curved roll 820, a portion 821 of the sheet 800 is positioned so that the barbs 806 are proximate the substrate 900 (i.e. proximate a substantially flat face 901 of the substrate), and so that the portion 821 is curved away from the substrate 900, so the textured face 802 is not parallel to the substantially flat face 901 of the substrate. As the sheet 800 is advanced along the roll 820, the barbs 806 are embedded in the substrate 900 while curving the portion 821 back towards the substrate 900 to position the textured face 802 parallel to the substantially flat face of the substrate 900. This causes deflection of the barbs 806 as they enter and embed in the substrate 900, and locking into the substrate 900.

Different roll diameters can cause different fan out angles. The roll diameter can optionally be selected to optimize the locking action in a range of different substrates having different characteristics, such as substrates of porous wood or hard plastic. In this example, the barbs can be the self-locking barbs 106 described with respect to Figures 5 to 7, or can be other barbs.

The result of this locking action is increased pull-apart/separation resistance of the mechanically connected materials (i.e. the textured sheet material and the substrate).

Figures 10, 11, and 11a show another example wherein self-locking is achieved by the process used to embed the barbs the substrate, independent of the shape of the barbs.

Referring to Figure 10, the sheet material 1000 is provided with wavy or curved portions 1022 that effectively shorten its length. Barbs 1006 in these wavy portions fan inwardly. Each wavy portion is curved so that the textured face 1002 in the curved portion 1022 is concave. There may be one or more such wavy portions. For example, on a sheet of material there may be at least two curved portions on two opposing sides of the sheet.

A rigid pressure plate 1024 positioned above the sheet material 1000 has a recess with side clearance 1026 to hold an elastomer pad 1028. Barbs 1006 under the pad 1028 are first pressed into the substrate 1100 as the elastomeric pad 1028 is compressed and squash-flows sideways into clearances 1026. Further downward travel brings the end portions of the plate 1024 against the wavy portions 1022 of the sheet material 1000, which are gradually pressed flat as the pad 1028 is further compressed. This flattening causes lateral deflection of the barbs 1006 as they enter the substrate 1100. The effect of the two movements, downward and lateral, causes deflection of the barbs 1006. This creates capture zones 1108, resulting in self-locking action. Figure 11 a is an enlarged view of one end of the sheet material 1000 of Figure 11, showing the capture zones 1108 of the substrate 1100 and the barbs 1006. The result of this self-locking action can be increased pull-apart resistance of the mechanically connected materials.

In Figures 12 and 13, another example is shown, wherein the barbs 1206 (only one barb 1206 is shown) are similar to the barbs 106 of Figures 1 to 7, but where the barbs 1206 have been coated with hard particulate material 1230, such as abrasive grains. This may be achieved by spreading a slurry of grains on the sheet 1200 or pre-applying adhesive followed by dusting/dipping with granular material. Referring to Figure 13, as the sheet 1200 is forced against substrate 1300, at least some of the particulate material 1230 is dragged into the substrate 1300 to become firmly embedded. The particulate material 1230 is believed to increase frictional forces on the barb 1206, so that they resist further travel into substrate 1300 in a direction along the thrust line 1314, and instead increase deflection, facilitating self-locking of the barbs and adding pull-out resistance to the mechanically connected materials.

The hard particulate material 1230 may be, for example, sand, aluminum oxide, silicon carbide, garnet, emery and the like.

In the above-described examples, the substrate may be "torn" by lateral movement of the barb shank near the root of the barb, caused by lateral forces on the sheet of material. In such cases, the substrate may be selected to be a resilient material so that it will, at least in part, return into the space temporarily created by the tearing.

While the above description provides examples of one or more processes or apparatuses, it will be appreciated that other processes or apparatuses may be within the scope of the accompanying claims.

To the extent any amendments, characterizations, or other assertions previously made (in this or in any related patent applications or patents, including any parent, sibling, or child) with respect to any art, prior or otherwise, could be construed as a disclaimer of any subject matter supported by the present disclosure of this application, Applicant hereby rescinds and retracts such disclaimer. Applicant also respectfully submits that any prior art previously considered in any related patent applications or patents, including any parent, sibling, or child, may need to be re-visited.

## Claims

1. A sheet of material comprising:
a planar portion, and a plurality of barbs extending from the planar portion;
wherein each of at least some of the barbs has, respectively, a barb root adjacent the planar portion, a barb shank adjacent the barb root, and a pointed barb tip adjacent the barb shank;
wherein the pointed barb tip overlies the barb shank and overlies the barb root;
wherein the pointed barb tip is pointed away from the planar portion; and
wherein the barb shank has a concave side and a convex side.

2. The sheet of material of claim 1, wherein at least some of the barbs are coated with hard particulate material.

3. The sheet of material of claim 2, wherein the hard particulate material comprises abrasive grains adhered to the barbs.

4. The sheet of material of claim 2 or claim 3, wherein the hard particulate material comprises at least one of sand, aluminum oxide, silicon carbide, garnet and emery.

5. The sheet of material of any one of claims 1 to 4, wherein the material is a metal, and the barbs extend integrally from the planar portion.

6. The sheet of material of any one of claims 1 to 5, wherein the pointed barb tip is pointed in a direction generally perpendicular to the planar portion.

7. A method of attaching a sheet of barbed material to a substrate, the method comprising the steps of:
a) positioning a sheet of barbed material adjacent a face of a substrate, wherein the sheet of barbed material has a planar portion, and a plurality of barbs extending from the planar portion, wherein each of at least some of the barbs has, respectively, a barb root adjacent the planar portion, a barb shank adjacent the barb root, and a pointed barb tip adjacent the barb shank, wherein the pointed barb tip overlies the barb shank and overlies the barb root, wherein the pointed barb tip is pointed in a direction away from the planar portion, and wherein the barb shank has a concave side and a convex side.
b) pushing the barbs into the substrate to embed the barbs in the substrate;
c) while pushing the barbs into the substrate, increasing the concavity of the concave side to create a capture zone of the substrate between the barb root and the pointed barb tip of each barb.

8. The method of claim 7, wherein step b) comprises i) pushing the pointed barb tips into the substrate, and ii) pushing the barb shanks into the substrate; and wherein the concavity of the concave side is increased during step ii).

9. The method of claim 8, wherein the concavity of the concave side is increased only during step ii).

10. The method of any one of claims 7 to 9, further comprising: prior to step b), coating the barbs with a hard particulate material.

11. The method of claim 10, wherein step b) comprises embedding the particulate material in the substrate.

12. The method of any one of claims 7 to 11, wherein the pointed barb tip is pointed in a direction generally perpendicular to the planar portion.
